# EUROPÄISCHE PATENTSCHRIFT

(11) **EP 1 103 176 B1**
(45) Veröffentlichungstag und Bekanntmachung des Hinweises auf die Patenterteilung: **08.09.2004**
(21) Anmeldenummer: 00125179.2
(22) Anmeldetag: 18.11.2000
(51) Int. Cl.: A01F 7/06

(54) **Rotor einer Axialtrennvorrichtung**
Rotor of an axial flow separator device
Rotor d'un dispositif séparateur à écoulement axial

(30) Priorität: 29.11.1999 US 451187
(43) Veröffentlichungstag der Anmeldung: 30.05.2001
(73) Patentinhaber: DEERE & COMPANY, Moline, Illinois 61265-8098 (US)
(72) Erfinder: Amann, Craig, Port Byron, IL 61275 (US); Heim, Daniel Mark, Moline, IL 61265 (US); Puryk, Corwin Marcus Raymond, East Moline, IL 61244 (US)
(74) Vertreter: Holst, Sönke, Dr.

(56) Entgegenhaltungen:
- EP-A- 0 340 876
- US-A- 5 112 279
- US-A- 5 192 245
- US-A- 5 688 170

## Beschreibung

Die Erfindung betrifft einen Rotor einer axialen Gutbearbeitungseinheit für einen Mähdrescher, wobei der Rotor in einer Drehrichtung in Drehung versetzbar ist, in der er betreibbar ist, Korn aus Erntegut abzuscheiden und einen Trennabschnitt aufweist, in dem sich eine Vielzahl voneinander beabstandeter, radial vom Körper des Rotors abstehender Zinken befindet und wenigstens ein Element zwischen voneinander beabstandeten Zinken angeordnet ist, das eine vom Körper des Rotors abstehende Fläche aufweist.

Axialmähdrescher, wie sie beispielsweise in der US 5 445 563 A und der 5 688 170 A offenbart sind, weisen einen einzelnen, innerhalb eines Rotorgehäuses angeordneten Rotor auf, der einen Dresch- und einen Trennabschnitt aufweist. Andere Axialmähdrescher, wie beispielsweise in der US 4 936 810 A offenbart, haben zwei seitlich nebeneinander angeordnete Rotoren. Diese beiden Rotoren weisen ebenfalls Dresch- und Trennabschnitte auf.

Die Anmelderin des vorliegenden Schutzrechts hat außerdem einen Hybridmähdrescher mit einer konventionellen, quer angeordneten Dreschtrommel und einer Trenneinrichtung mit einem Rotor entwickelt und vertreibt ihn. Dieses Hybridsystem ist in der US 5 112 279 A gezeigt. Die in dieser Patentschrift offenbarte Trenneinheit umfasst ein Rotorgehäuse mit einem Paar darin seitlich nebeneinander angeordneter Rotoren.

Die in den oben erwähnten Patentschriften offenbarten Rotoren weisen um den Umfang des Rotorkörpers verteilte Gutmitnehmerelemente auf. In der US 5 688 170 A sind die Gutmitnehmerelemente im Trennabschnitt des Rotors fingerartige Zinken, die vom Rotorkörper radial nach außen zeigen. Die Zinken dringen in das Erntegut ein und ziehen es um den Rotor herum, anstelle das Gut zu schieben, wie es bei anderen Axialmähdreschern typisch ist. Diese Zugwirkung hindert das Gut daran, zu rollen und Stricke aus dem Gut zu drehen oder Klumpen zu bilden, die die Trenneinrichtung verstopfen können. Wegen der Form des Rotorgehäuses wird das Gut anfangs von den Zinken erfasst, gedreht und dann freigegeben, wenn das Gut nach oben gegen Gutführungskufen am oberen Abschnitt des Rotorgehäuses geworfen wird. Die Kufen führen das Material nach hinten. Das Freigeben des Guts ist Folge der Zentrifugalkraft, die das Gut von den Zinken in den oberhalb des Rotors vorhandenen Raum hebt, der durch ein nichtkonzentrisches Rotorgehäuse gebildet wird.

Eine Trennung des Korns vom Gut wird dadurch erzielt, dass das Korn sich radial durch Roste am Boden des Rotorgehäuses nach außen bewegt.

Weiterhin wird ein Rotor eingangs genannter Art in der EP 0 340 876 A beschrieben. Im hinteren Abschnitt des Rotors sind etwa radial abstehende Fingerelemente und dazwischen radial abstehende, sich in Längsrichtung des Rotors erstreckende Leisten angebracht. Die Leisten können das Erntegut nur in Drehrichtung fördern.

Die der Erfindung zugrunde liegende Aufgabe wird darin gesehen, einen verbesserten Rotor bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, den Rotor mit einem oder mehreren, radial überstehenden Rampensegmenten auszustatten, die zwischen den - in axialer Richtung und/oder Umfangsrichtung des Rotors - voneinander beabstandeten Zinken verteilt werden. Die Rampensegmente weisen eine geneigte Fläche auf, die die Körner radial nach außen schicken, wenn sich das Rampensegment durch das Erntegut bewegt.

Auf diese Weise wird die Kapazität der Trenneinrichtung vergrößert, da die Fähigkeit des Mähdreschers, die Körner aus dem Erntegut herauszulösen, verbessert wird. Dadurch kann mehr Erntegut von der Trenneinrichtung verarbeitet werden, ohne die Effizienz der Trenneinrichtung zu vermindern, d. h. ohne die Kornverluste an der Rückseite des Mähdreschers zu vergrößern. Bei anfänglichen Tests wurde festgestellt, dass sich die größten Verdienste der Rampensegmente beim Ernten kleinerer Körner bemerkbar machen.

Das Testen hat auch gezeigt, dass der größte Anstieg der Trennkapazität vorliegt, wenn die Anzahl der Rampensegmente im Bereich von etwa 25% bis 50% der Anzahl der Zinken liegt. Wenn die Anzahl der Rampensegmente steigt, steigt auch die zum Drehen der Rotors erforderliche Leistung.

Die Rampensegmente sind vorzugsweise breiter und kürzer als die Zinken.

Die Rampensegmente stellen eine geneigte Fläche bereit, die vorzugsweise trapezförmig ist. Die Fläche hat somit nach innen geneigte vordere und hintere Ränder, so dass der radial äußere Rand der Fläche kürzer als der innere Rand der Fläche ist. Die Trapezform der Rampensegmente erleichtert das Abwerfen von Erntegut und verhindert dadurch, dass Erntegut sich an den Rampensegmenten verfängt. Außerdem können die Rampensegmente durch Seitenwände seitlich verschlossen werden.

Die Rampensegmente werden vorzugsweise im Trennbereich des Rotors verwendet. Denkbar wäre aber auch, sie zusätzlich (oder ausschließlich) im Dreschbereich zu benutzen, wobei sie allein oder gemischt mit Zinken Verwendung finden können.

In den Zeichnungen sind vier nachfolgend näher beschriebene Ausführungsbeispiele der Erfindung dargestellt. Es zeigt:
- Fig. 1: eine Seitenansicht eines landwirtschaftlichen Axialmähdreschers;
- Fig. 2: eine perspektivische Ansicht des Rotors, in der erfindungsgemäße Gutmitnehmerelemente mit Rampensegmenten dargestellt sind;
- Fig. 3: eine Abwicklung des Rotors aus Figur 2;
- Fig. 4: eine Abwicklung eines Rotors nach einer anderen Ausführungsform der Erfindung;
- Fig. 5: eine Abwicklung eines Rotors nach einer weiteren Ausführungsform der Erfindung;
- Fig. 6: eine Abwicklung eines Rotors nach einer wiederum anderen Ausführungsform der Erfindung;
- Fig. 7: eine perspektivische Ansicht eines Rampensegments gemäß der vorliegenden Erfindung;
- Fig. 8: eine Seitenansicht eines erfindungsgemäßen Rampensegments;
- Fig. 9: eine rückseitige Ansicht eines erfindungsgemäßen Rampensegments.

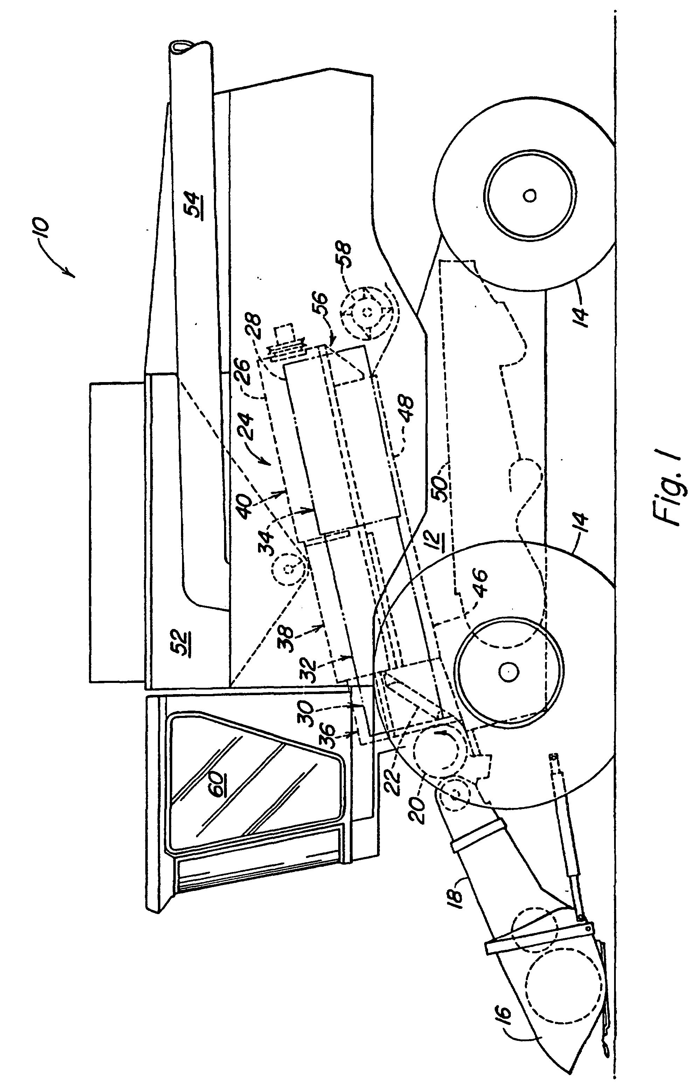

Figur 1 zeigt einen landwirtschaftlichen Mähdrescher 10 mit einer tragenden Struktur 12, die mit dem Boden im Eingriff befindliche Mittel 14 aufweist, die sich von der tragenden Struktur 12 nach unten erstrecken. In der dargestellten Ausführungsform umfassen die mit dem Boden im Eingriff befindlichen Mittel 14 Räder und Reifen, jedoch könnten auch Gleisketten, entweder aus Stahl oder Gummi, verwendet werden. Ein Erntevorsatz 16 wird verwendet, Gut zu ernten und es einem Schrägförderer 18 zuzuführen. Das geerntete Gut wird durch den Schrägförderer 18 einer Leittrommel 20 zugeführt. Die Leittrommel 20 führt das Gut nach oben durch einen Einlassübergangsabschnitt 22 einer axialen Gutbearbeitungseinheit 24 zu. Die axiale Gutbearbeitungseinheit 24 ist zwischen den Seitenwänden des Mähdreschers 10 angeordnet. Die Seitenwände bilden einen Teil der tragenden Struktur 12 des Mähdreschers 10.

Die axiale Gutbearbeitungseinheit 24 umfasst ein axiales Rotorgehäuse 26 mit einem darin angeordneten axialen Rotor 28. Das geerntete Gut tritt durch den Einlassübergangsbereich 22 in das Rotorgehäuse 26 ein. Der Rotor 28 ist mit einem Beschickungsabschnitt 30, einem Dreschabschnitt 32 und einem Trennabschnitt 34 ausgestattet. Das Rotorgehäuse 26 hat einen entsprechenden Beschickungsabschnitt 30, einen Dreschabschnitt 38 und einen Trennabschnitt 40.

Beide Bearbeitungsabschnitte des Rotors 28, der Dreschabschnitt 32 und der Trennabschnitt 34, sind mit Gutmitnehmerelementen versehen. Der Dreschabschnitt 38 des Rotorgehäuses 26 ist mit einem Dreschkorb 46 ausgestattet und der Trennabschnitt 40 ist mit einem Rost 48 versehen. Aus der Gutmatte freigesetzte Körner und Spreu fallen durch den Dreschkorb 46 und das Rost 48. Der Dreschkorb 46 und das Rost 48 verhindern einen Eintritt von Gutteilen, die größer als Körner oder Spreu sind, in die Reinigungseinrichtung 50.

Wie in Figur 1 illustriert, werden durch den Dreschkorb 46 und das Rost fallende Körner und Spreu der Reinigungseinrichtung 50 zugeführt, die die Spreu von den Körnern trennt. Die gereinigten Körner werden dann durch einen (nicht gezeigten) Körnerelevator in den Korntank gefördert, aus dem sie durch eine Entladeförderschnecke 54 auf einen Lastwagen oder Anhänger gefördert werden können.

Wenn das Stroh das Ende der Gutbearbeitungseinheit 24 erreicht, wird es durch einen Auslass 56 einer Abgabetrommel 58 zugeführt. Die Abgabetrommel 58 fördert das Stroh zur Rückseite des Mähdreschers 10 hinaus. Der Betrieb des Mähdreschers 10 wird von einer Bedienerkabine 60 aus gesteuert.

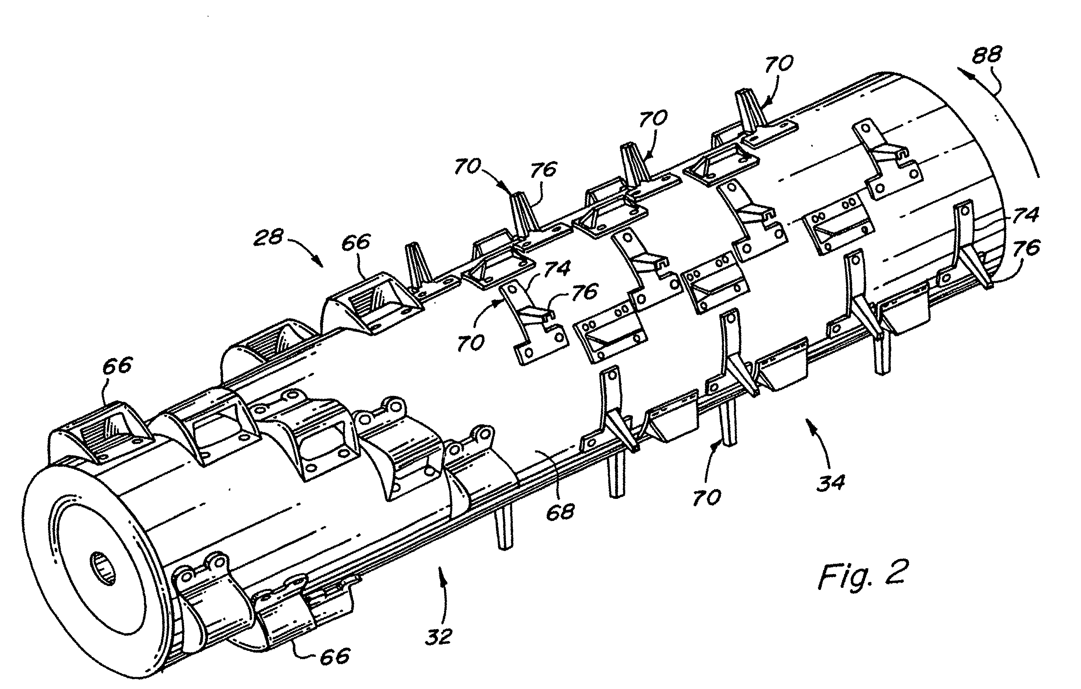

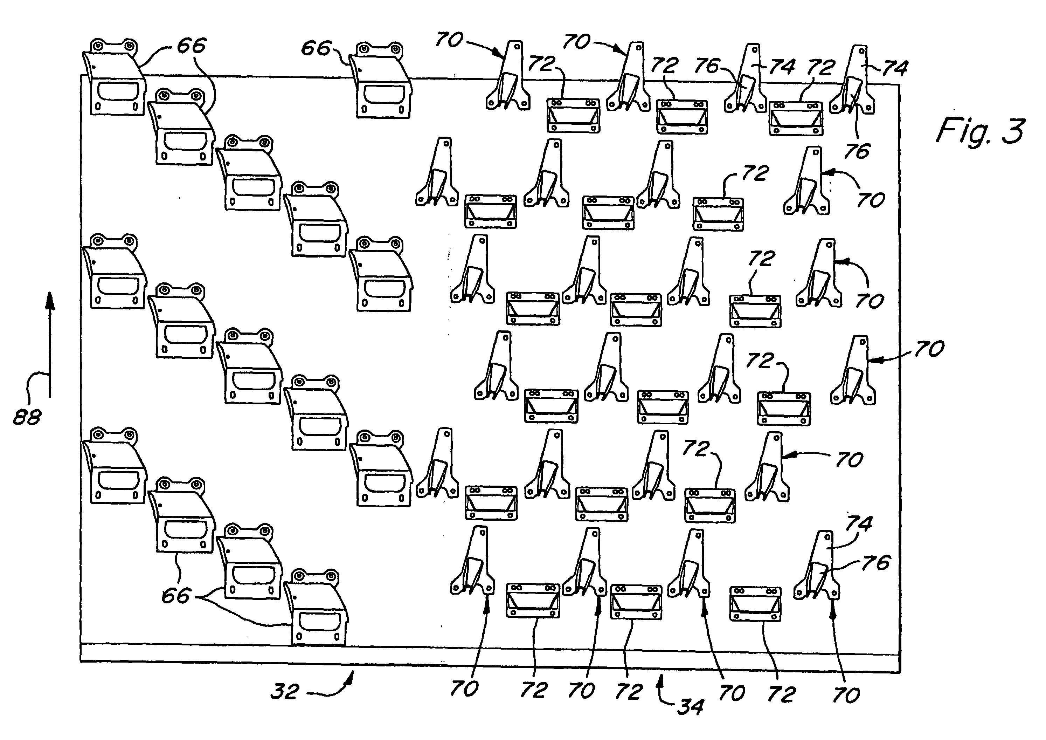

Es wird nun auf die Figuren 2 und 3 verwiesen, in denen eine Ausführungsform des Dreschabschnitts 32 und des Trennabschnitts 34 des Rotors 28 als Ausführungsbeispiel gezeigt ist. Im Dreschabschnitt 32 sind Gutmitnehmerelemente 66 an dem Körper 68 des Rotors 28 befestigt. Im Trennabschnitt 34 ist der Rotor 28 mit zwei Typen von Gutmitnehmerelementen ausgestattet, Zinken 70 und Rampensegmenten 72. Die Zinken 70 sind in sechs sich axial erstreckenden Reihen angeordnet, mit vier axial beabstandete Zinken in jeder Reihe. Die Zinken 70 bestehen jeweils aus einem Basisbefestigungsabschnitt 74, der an den Körper 68 des Rotors 28 geschraubt ist, und einem langgestreckten fingerartigen Zinkenabschnitt 76, der sich radial vom Körper 68 des Rotors 28 nach außen erstreckt. In jeder Reihe sind die Zinken axial von den Zinken in den in Umfangsrichtung benachbarten Reihen axial versetzt.

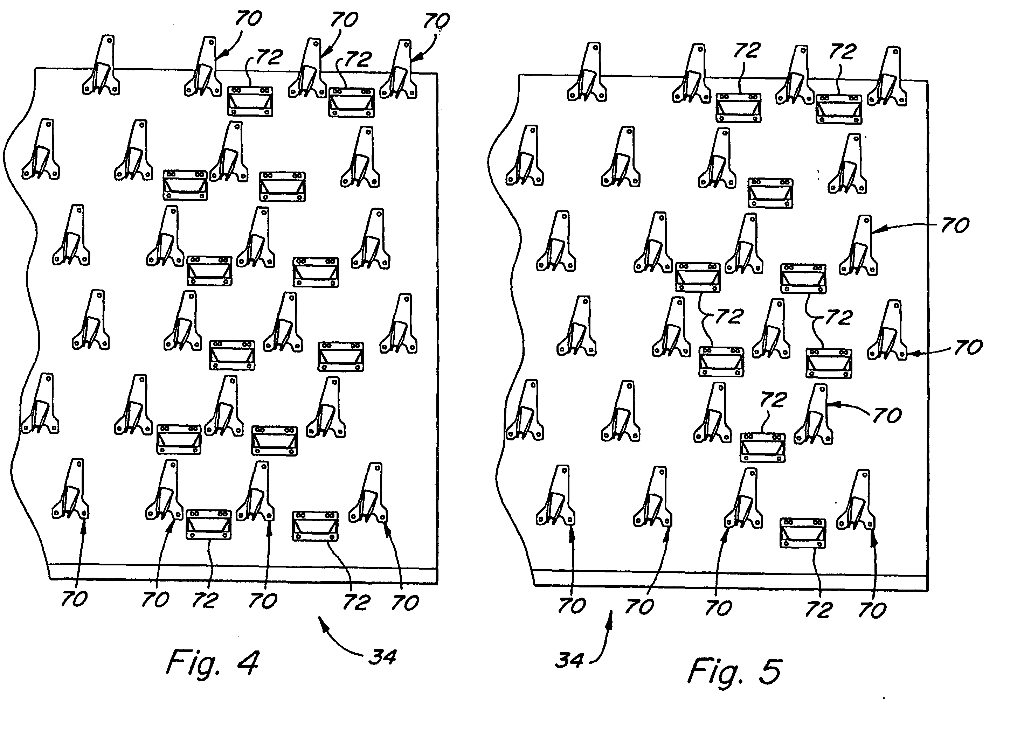

Bei der in den Figuren 2 und 3 gezeigten Ausführungsform sind vierundzwanzig Zinken 70 und achtzehn Rampensegmente 72 vorhanden. Bei dieser Anordnung wechseln sich in jeder Reihe Zinken 70 und Rampensegmente 72 miteinander ab, wobei jede Reihe in axialer Richtung mit einem Zinken 70 anfängt und endet. Die Anordnung mit achtzehn Rampensegmenten 72 weist die maximal bevorzugte Dichte an Rampensegmenten auf. Andere Ausführungsformen mit weniger Rampensegmenten 72 sind in den Figuren 4 bis 6 gezeigt. Bei weniger Rampensegmenten 72 wird weniger Leistung zur Drehung des Rotors 28 benötigt.

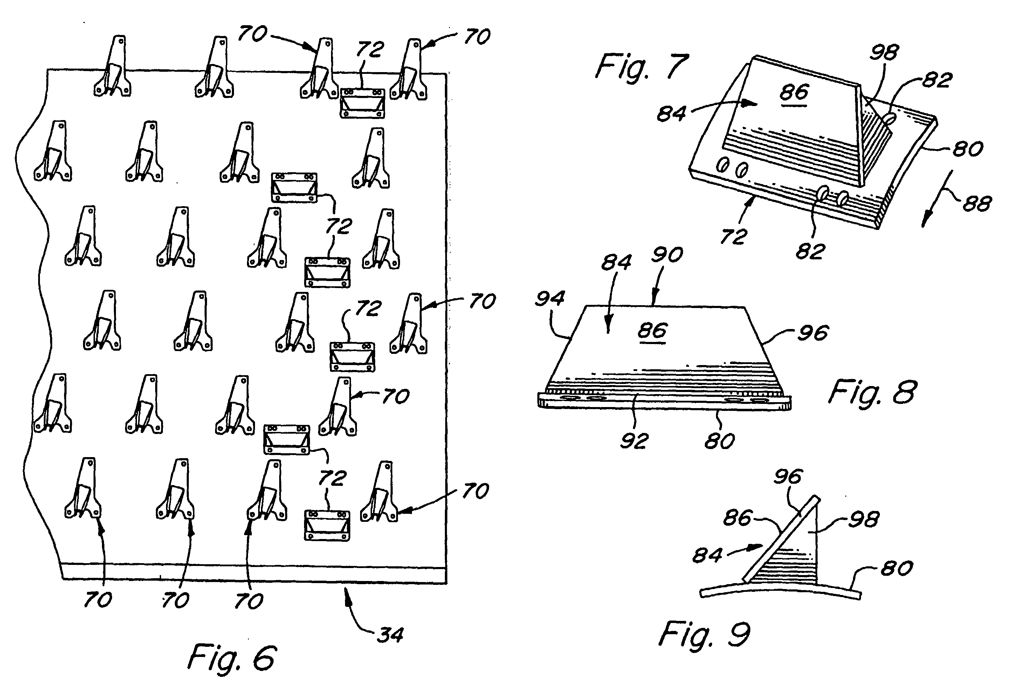

Bei der in Figur 4 dargestellten Ausführungsform sind zwölf Rampensegmente 72 vorgesehen, wobei Rampensegmente 72 in den letzten zwei Zwischenräumen zwischen den Zinken 70 jeder Reihe von Zinken 70 angeordnet sind. Die Anzahl der Rampensegmente 72 entspricht 50% der Anzahl der Zinken 70. In der in Figur 5 gezeigten Ausführungsform sind neun Rampensegmente 72 vorhanden, wobei zwei Rampensegmente 72 in den letzten zwei Zwischenräumen dreier Reihen von Zinken 70 und ein Rampensegment im letzten Zwischenraum in den anderen drei Reihen von Zinken 70 vorhanden sind. Die Ausführungsform in Figur 6 hat nur sechs Rampensegmente 72, wobei ein Rampensegment 72 im letzten Zwischenraum jeder der Reihen von Zinken 72 vorhanden ist. Die Anzahl der Rampensegmente entspricht 25% der Anzahl an Zinken 70. Wenn gewünscht, könnten auch weniger als sechs Rampensegmente 72 verwendet werden.

Die Rampensegmente 72 sind in den Figuren 7 bis 9 detaillierter dargestellt. Jedes Rampensegment 72 umfasst eine Grundplatte 80 mit einer Vielzahl an Öffnungen 82 zum Anschrauben des Rampensegments 72 an den Körper 68 des Rotors 28. Ein Rampenabschnitt 84 erstreckt sich von der Grundplatte 80 nach außen und bildet eine Fläche 86, die sich in erster Linie axial zum Rotor 28 erstreckt und von ihm radial nach außen übersteht. Die Fläche 86 ist gegenüber der durch die Pfeile 88 angedeuteten Drehrichtung nach hinten geneigt, so dass der radial äußere Rand 90 in Drehrichtung hinter dem radial inneren Rand 92 liegt. Dadurch werden gegen die Fläche 86 stoßende Körner radial nach außen abgelenkt, wenn der Rotor 28 sich dreht. Obwohl bevorzugt ist, die Rampenabschnitte 84 axial zum Rotor 28 zu orientieren, könnte es möglich sein, die Rampenabschnitte 84 gegenüber der Rotorachse im Winkel anzuordnen und Körner sowohl radial nach außen und axial nach hinten abzulenken und eine Vergrößerung der Separationskapazität zu erzielen.

Die Fläche 86 ist trapezförmig; sie hat einen radial äußeren Rand 90, der kürzer als der innere Rand 92 ist. Die Trapezform der Fläche 86 hat außerdem nach innen geneigte vordere und hintere Ränder 94, 96 zur Folge. Die geneigten Ränder 94, 96 ermöglichen es dem Erntegut, von den Rampensegmenten 72 abzugleiten, um die Wahrscheinlichkeit zu vermindern, dass sich Erntegut an den Rampensegmenten 72 ansammelt. Ebenfalls, um eine Gutansammlung an den Rampensegmenten 72 zu verhindern, haben die Rampensegmente 72 vordere und rückwärtige Seitenwände 98, von denen nur eine gezeigt ist. Diese Seitenwände 98 sind im wesentlichen dreiecksförmig. Durch eine Bereitstellung dreieckiger Seitenwände 98 haben die Rampensegmente 72 eine pyramidenartige Form, die sich zum äußeren Ende verjüngt, so dass sich um das Rampensegment 72 wickelndes Gut gegebenenfalls radial vom Rampensegment 72 abgleiten kann. Die Rampensegmente 72 sind axial breiter als die Zinken 70 und sind radial kürzer als die Zinken 70.

Wie in den Zeichnungen dargestellt, können die Rampensegmente 72 axial zwischen den beabstandeten Zinken 70 positioniert werden, so dass die Rampensegmente 72 im wesentlichen in Drehrichtung vor einem Zinken 70 der benachbarten Reihe von Zinken 70 angeordnet sind. Die geneigte Fläche 86 des Rampensegments 72 wirkt derart, dass Körner radial nach außen durch die Matte des Ernteguts hindurch abgelenkt werden, so dass die Körner durch das Rost 48 und in das Reinigungssystem 50 des Mähdreschers 10 gelangen können. Im Ergebnis wird eine vergrößerte Separationskapazität erzielt, die es ermöglicht, eine größere Menge an Erntegut in einer gegebenen Zeit durch die Trenneinrichtung zu leiten, während die Effizienz der Trennung aufrechterhalten bleibt oder verbessert wird. Die erfindungsgemäßen Rampensegmente 72 können an Mähdreschern 10 mit einem oder zwei Rotoren 28 verwendet werden, wie sie oben beschrieben sind.

## Patentansprüche

1. Rotor (28) einer axialen Gutbearbeitungseinheit (24) für einen Mähdrescher (10), wobei der Rotor (28) in einer Drehrichtung in Drehung versetzbar ist, in der er betreibbar ist, Korn aus Erntegut abzuscheiden und einen Trennabschnitt (34) aufweist, in dem sich eine Vielzahl voneinander beabstandeter, radial vom Körper (68) des Rotors (28) abstehender Zinken (70) befindet und wenigstens ein Element zwischen voneinander beabstandeten Zinken (70) angeordnet ist, das eine vom Körper (68) des Rotors (28) abstehende Fläche (86) aufweist, **dadurch gekennzeichnet, dass** das Element ein Rampensegment (72) ist, dessen vom Körper (68) abstehende Fläche (86) gegenüber der genannten Drehrichtung des Rotors (28) nach hinten geneigt ist, so dass ein radial äußerer Rand (90) der Fläche (86) in der genannten Drehrichtung des Rotors (28) einem radial inneren Rand (92) der Fläche (86) nachläuft.

2. Rotor (28) nach Anspruch 1, **dadurch gekennzeichnet, dass** das wenigstens eine Rampensegment (72) zwischen axial und/oder im Umfangsrichtung des Rotors (28) beabstandeten Zinken (70) angeordnet ist.

3. Rotor (28) nach Anspruch 1 oder 2, **dadurch gekennzeichnet, dass** die Anzahl der Zinken (70) größer als die Anzahl der Rampensegmente (72) ist.

4. Rotor (28) nach Anspruch 3, **dadurch gekennzeichnet, dass** die Anzahl der Rampensegmente (72) zwischen fünfundzwanzig und fünfzig Prozent der Anzahl der Zinken (70) liegt.

5. Rotor (28) nach einem der Ansprüche 1 bis 4, **dadurch gekennzeichnet, dass** das wenigstens eine Rampensegment (72) eine in axialer Richtung des Rotors (28) gemessene Breite hat, die größer als die Breite der Zinken (70) ist.

6. Rotor (28) nach einem der Ansprüche 1 bis 5, **dadurch gekennzeichnet, dass** die Zinken (70) radial weiter vom Körper (68) des Rotors (28) abstehen als das Rampensegment (72).

7. Rotor (28) nach einem der Ansprüche 1 bis 6, **dadurch gekennzeichnet, dass** das wenigstens eine Rampensegment (72) einen axial vorderen Rand (94) und einen axial hinteren Rand (96) aufweist, die zum Inneren des Rampensegments (72) geneigt sind, wobei die Fläche (86) des Rampensegments (72) trapezförmig ist und die in axialer Richtung des Rotors (28) gemessene Länge des äußeren Randes (90) der Fläche (86) kürzer ist als die Länge des inneren Randes (92) der Fläche (86).

8. Rotor (28) nach einem der Ansprüche 1 bis 7, **dadurch gekennzeichnet, dass** das wenigstens eine Rampensegment (72) dreieckförmige Seitenwände aufweist, die sich am axial vorderen Rand (94) und am axial hinteren Rand (96) der Fläche (86) in Umfangsrichtung des Rotors (28) erstrecken.

9. Kombination aus einem Rotorgehäuse (26) und einem Rotor (28) nach Anspruch 1, **dadurch gekennzeichnet, dass** der Rotor (26) innerhalb des Rotorgehäuses (26) angeordnet ist, das einen Trennabschnitt (40) aufweist, in dem ausgedroschene Körner vom gedroschenen Erntegut getrennt werden.

10. Mähdrescher (10) mit einem Rotor (28) nach einem der Ansprüche 1 bis 8 oder einer Kombination nach Anspruch 9.

## Claims

1. A rotor (28) of an axial crop processing unit (24) for a combine harvester (10), wherein the rotor (28) can be set in rotation in a direction of rotation, in which it is operable to separate grain from harvested crop, and comprises a separating section (34) in which a plurality of tines (70) are located, spaced from one another and projecting radially from the body (68) of the rotor (28), and at least one element is arranged between tines (70) spaced from one another and has a surface (86) standing out from the body (68) of the rotor (28), **characterized in that** the element is a ramp segment (72) whose surface (86) standing out from the body (68) is inclined to the rear relative to the said direction of rotation of the rotor (28), so that a radially outer edge (90) of the surface (86) trails a radially inner edge (92) of the surface (86) in the said direction of rotation of the rotor (28).

2. A rotor (28) according to claim 1, **characterized in that** the at least one ramp segment (72) is arranged between tines (70) spaced axially and/or in the peripheral direction of the rotor (28).

3. A rotor (28) according to claim 1 or 2, **characterized in that** the number of tines (70) is greater than the number of the ramp segments (72).

4. A rotor (28) according to claim 3, **characterized in that** the number of the ramp segments (72) lies between twenty five and fifty percent of the number of tines (70).

5. A rotor (28) according to any of claims 1 to 4, **characterized in that** the at least one ramp segment (72) has a width measured in the axial direction of the rotor (28) which is greater then the width of the tines (70).

6. A rotor (28) according to any of claims 1 to 5, **characterized in that** the tines (70) project further radially from the body (68) of the rotor (28) than the ramp segment (72).

7. A rotor (28) according to any of claims 1 to 6, **characterized in that** the at least one ramp segment (72) has an axially front edge (94) and an axially rear edge (96) which are inclined inwardly of the ramp segment (72) , whereby the surface (86) of the ramp segment (72) is trapezoidal and the length of the outer edge (90) of the surface (86) measured in the axial direction of the rotor (28) is shorter than the length of the inner edge (92) of the surface (86).

8. A rotor (28) according to any of claims 1 to 7, **characterized in that** the at least one ramp segment (72) has triangular side walls which extend in the peripheral direction of the rotor (28) at the axially front edge (94) and at the axially rear edge (96) of the surface (86).

9. A combination of a rotor housing (26) and a rotor (28) according to claim 1, **characterized in that** the rotor (28) is arranged inside the rotor housing (26), which has a separating section (40) in which threshed grains from the threshed harvested crop are separated.

10. A combine harvester (10) with a rotor (28) according to any of claims 1 to 8 or a combination according to claim 9.

## Revendications

1. Rotor (28) d'une unité de traitement de récolte à cheminement axial (24) pour une moissonneuse-batteuse (10), du type dans lequel le rotor (28), en cours de rotation, est déplaçable dans une direction de rotation dans laquelle il est fonctionnel pour séparer le grain du produit moissonné et une section de séparation (34) dans laquelle se trouve une pluralité de pointes radiales (70) espacées l'une de l'autre, partant du corps (68) du rotor (28), et, entre les pointes (70) espacées l'une de l'autre est disposé au moins un élément qui comporte une surface (86) écartée du corps (68) du rotor (28), **caractérisé en ce que** l'élément est un segment de rampe (72) dont la surface (86) espacée du corps (68) est inclinée vers l'arrière à l'opposé de ladite direction de rotation du rotor (28), de manière telle qu'un bord radial extérieur (90) de la surface (86) prolonge un bord radial intérieur (92) de la surface (86) dans ladite direction de rotation du rotor (28).

2. Rotor (28) selon la revendication 1, **caractérisé en ce que** au moins un élément de rampe (72) est disposé entre des pointes (70) espacées axialement et/ou sur la périphérie du rotor (28).

3. Rotor (28) selon la revendication 1 ou 2, **caractérisé en ce que** le nombre de pointes (70) est supérieur au nombre de segments de rampes (72).

4. Rotor (28) selon la revendication 3, **caractérisé en ce que** le nombre de segments de rampes (72) se situe entre 25 et 50% du nombre de pointes (70).

5. Rotor (28) selon l'une quelconque des revendications 1 à 4, **caractérisé en ce que** le ou au moins un segment de rampe (72) a une largeur supérieure à la largeur des pointes (70), mesurée dans la direction axiale du rotor.

6. Rotor (28) selon l'une quelconque des revendications 1 à 5, **caractérisé en ce que** les pointes (70) s'élèvent radialement du corps (68) du rotor (28) plus loin que le segment de rampe (72).

7. Rotor (28) selon l'une quelconque des revendications 1 à 6, **caractérisé en ce que** le, ou au moins un segment de rampe (72) présente un bord axial frontal (94) et un bord axial postérieur (96) qui sont inclinés vers l'intérieur du segment de rampe (72), la surface (86) du segment de rampe (72) ayant la forme d'un trapèze et la longueur du bord radial extérieur (90) de la surface (86), mesurée dans la direction axiale du rotor est plus courte que la longueur du bord radial intérieur (92) de la surface (86).

8. Rotor (28) selon l'une quelconque des revendications 1 à 7, **caractérisé en ce que** le, ou au moins un segment de rampe (72) présente des parois latérales en forme de triangle qui s'étendent sur le rebord axial frontal (94) et sur le rebord axial postérieur (96) de la surface (86) dans la direction de la périphérie du rotor (28).

9. Combinaison d'un carter de rotor (26) et d'un rotor (28) selon la revendication 1, **caractérisée en ce que** le rotor (28) est monté à l'intérieur du carter de rotor (26) qui comporte une section de séparation (40) dans laquelle est séparé le grain extrait par battage du produit de la récolte battu.

10. Moissonneuse-batteuse (10) comportant un rotor (28) selon l'une quelconque des revendications 1 à 8 ou une combinaison selon la revendication 9.
